# EUROPEAN PATENT APPLICATION

(11) **EP 3 792 850 A1**
(43) Date of publication of application: **17.03.2021**
(21) Application number: 19798843.9
(22) Date of filing: 08.05.2019
(51) Int. Cl.: G06Q 10/06, G05B 19/418, G06Q 50/04

(54) **CHEMICAL PRODUCT PRODUCTION SYSTEM**

(30) Priority: 10.05.2018 JP 2018091073
(71) Applicant: Daicel Corporation, Osaka 530-0011 (JP)
(72) Inventor: OKUMURA, Kouichi, Tokyo 108-8230 (JP)
(74) Representative: Grünecker Patent- und Rechtsanwälte PartG mbB
(86) International application number: PCT/JP2019/018416
(87) International publication number: WO 2019/216347

(57) **Abstract**

Provided is a chemical product production system that can efficiently utilize the capacity of a plurality of existing chemical plants (chemical product production plants) to achieve overall optimization of the production and supply of chemical products.

In the chemical product production system that effectively utilizes a plurality of chemical plants, a management server and a user terminal of each of a plurality of chemical plants are connected through a network. The management server is provided with: various databases for collecting and accumulating user-specific ID numbers and information that is transmitted from each user terminal and pertains to a plant operating status by chemical product, and information on a supply forecast and a demand forecast by chemical product for a certain time period in the future; a difference calculation function unit that calculates a difference between the demand forecast and the supply forecast; a simulation function unit that allocates the difference to one or more chemical plants and simulates a production plan, etc.; and a transmission function unit that transmits to each user terminal the production plan and a storage and delivery plan, optimized through the simulation.

## Description

### Technical Field

The present invention relates to a chemical product production system for efficiently producing chemical products by adjusting the operation of a plurality of chemical plants. The present application claims the priority to JP 2018-091073 filed in Japan on May 10, 2018, the content of which is incorporated herein.

### Background Art

The excess and deficiency of capacity in chemical product production plants is in an unbalanced state worldwide. In the related art, in chemical product production plants, when the capacity exceeds demand (when demand is low relative to the capacity), the operating rate is reduced, operations themselves are paused, or plant adjustments are made. On the other hand, when the capacity is insufficient relative to demand (when the demand is greater than the capacity), new investments can be made to construct a new plant or expand an existing plant, or the insufficient capacity can be covered by traded flexibility from other companies in the same industry.

However, even if the operating rate is reduced, maintaining the plant requires resources (people, goods, money) for service operations and maintenance, and unnecessary energy is consumed to maintain the plant. In addition, shutting down or adjusting a plant leads to problems such as an environmental burden, personnel reductions, and enormous costs associated with business closure. Also, in the case of new investments, when demand decreases and falls short of the predicted demand, a new problem of excess capacity arises, resulting in an inability to flexibly respond to increases and decreases in demand. Traded flexibility is a transaction between specific companies and is not always a transaction that optimally reflects the global supply balance. Traded flexibility also adds unnecessary distribution costs to customers.

Patent Document 1 discloses a plant operation optimization system, the purpose of which is to provide a system for optimizing operations of an industrial plant, the plant operation optimization system being provided with: a risk calculation system configured to calculate a risk based on static and dynamic inputs; a decision support system configured to use the risk to derive a decision; and a plant control system configured to update operations of the plant based on a decision predicting future plant conditions. However, this plant operation optimization system is a system for optimizing operations within a single company, and is not intended to be a system for optimizing operations between a plurality of companies within a predetermined area.

### Citation List

### Patent Document

Patent Document 1: JP 2012-238308 A

### Summary of Invention

### Technical Problem

Therefore, an object of the present invention to provide a chemical product production system that efficiently utilizes the capacity of chemical plants (chemical product production plants) in a predetermined area, such as, for example, Japan or Asia, or worldwide to achieve overall optimization of the production and supply of chemical products.

Another object of the present invention is to provide a chemical product production system that shares plant operating conditions of chemical plants in a predetermined area, such as, for example, Japan or Asia, or worldwide, automatically matches a plant with excess capacity (supply side) and a plant having a capacity shortage (demand side), and based on the matching, automatically calculates and automatically proposes a production and delivery plan.

Yet another object of the present invention is to provide a chemical product production system in which the supply side and the demand side can be anonymous in the matching described above.

Another object of the present invention is to provide, in addition to the objects described above, a chemical product production system that is further accompanied with a revenue model.

Yet another object of the present invention is to provide, in addition to the objects described above, a chemical product production system that is premised on a public organization such as a national government agency, or a private organization such as a trading company as an operating entity.

### Solution to Problem

As a result of diligent examinations to achieve the objects described above, the present inventors discovered that when a system is constructed in which each user terminal of a plurality of chemical plants is connected with a management server through a network, information that is transmitted from each user terminal and pertains to the operating status by chemical product of the plurality of chemical plants is collected and accumulated in the management server, information of a future supply forecast by chemical product and information of a future demand forecast by chemical product are collected and accumulated in the management server, a difference between the demand forecast and the supply forecast in a predetermined future time period for a chemical product is calculated, the difference is allocated to one or more chemical plants, the difference is simulated as a production plan, the difference is simulated as a storage and delivery plan, and the obtained production plan and storage and delivery plan for the chemical product are transmitted to each user terminal, the capacity of each plant can be efficiently used, and overall optimization of chemical product production and supply can be achieved, and thereby the present inventors arrived at the present invention.

That is, the present invention provides a chemical product production system that effectively utilizes a plurality of chemical plants, wherein a management server and a user terminal of each of a plurality of chemical plants are connected through a network; and the management server is provided with: a database that collects and accumulates user-specific ID numbers and information that is transmitted from each user terminal and pertains to a plant operating status by chemical product; a database that collects and accumulates information on a supply forecast by chemical product for a certain time period in the future; a database that collects and accumulates information on a demand forecast by chemical product for the certain time period in the future; a function unit that calculates a difference between the demand forecast and the supply forecast for a chemical product for the certain time period in the future; a function unit that allocates the difference to one or more chemical plants; a function unit that simulates the difference as a production plan; a function unit that simulates the difference as a storage and delivery plan; and a transmission unit that transmits to each user terminal the production plan and the storage and delivery plan.

The management server may further include a function unit that calculates a differential revenue.

The chemical product may be a chemical product derived from petroleum or coal, or a chemical product derived from biomass.

Advantageous Effects of Invention

According to the present invention, based on a database in which specific information regarding a plurality of chemical plants is accumulated, a database in which information on a future supply forecast by chemical product is accumulated, and a database in which information regarding a future demand forecast by chemical product is accumulated, a difference between a demand forecast and a supply forecast for a predetermined chemical product for a predetermined time period in the future is calculated, the difference is allocated to each chemical plant, a production plan and a storage and delivery plan for the chemical product are simulated, and the result is transmitted to each chemical plant, and therefore the capacity of chemical plants in a predetermined area, for example, chemical plants in Japan, or chemical plants worldwide can be effectively utilized to achieve overall optimization of the production and supply of the chemical product.

In addition, since determinations are made based on objective data, production and distribution innovations can be achieved on a global level without being influenced by an independent decision by a specific manufacturer or specific trading company.

Furthermore, since risk can be dispersed, the management burden with regard to investments and amortization can be alleviated for small and medium-sized companies in particular.

In addition, since energy can be more efficiently utilized, the environmental burden can also be reduced.

### Brief Description of Drawings

FIG. 1 is a schematic block diagram illustrating one embodiment of a chemical product production system of the present invention.
FIG. 2 is a schematic manufacturing flow chart pertaining to an n-butyl acetate production system, which is an example of the chemical product production system of the present invention.

### Description of Embodiments

A system for producing chemicals according to an embodiment of the present invention is a chemical product production system that effectively utilizes a plurality of chemical plants (chemical product production plants) to efficiently produce chemicals. In the chemical product production system, a management server and a user terminal of each of the plurality of chemical plants are connected through a network.

The management server has a database that collects and accumulates user-specific ID numbers and information that is transmitted from each user terminal and pertains to a plant operating status by chemical product. Each user of the system can be managed by a user-specific ID number, and thus the anonymity of the users can be achieved. Information that is transmitted from each user terminal and pertains to the plant operating status by chemical product includes information regarding the past, present, and future operating status by chemical product and operating forecast of each plant. This information may also include the manufacturing flow, the names of chemical products that can be produced, the production capacity, the storage capacity, and the transport capacity, etc. of each plant.

As information pertaining to the operating status collected from each plant, types of information such as the flow rate (flow rate per unit time or integrated value) of a fluid or the like flowing through each pipe, and the liquid volume in a tank that stores a distillate or the like are used as parameters that are directly necessary for controlling the plurality of plants. The flow rate of the fluid or the like flowing through each of the pipes can be measured by, for example, a flow meter with an integration function. The liquid volume of a tank can be measured by, for example, a liquid level gauge. Furthermore, it is also desirable to collect auxiliary information such as, for example, the open/closing state or degree of opening of a valve, the temperature and pressure of each device, the rotational speed of a pump motor, and the temperature and flow rate of a heating medium (such as steam or hot water) or a refrigerant (such as water, brine, or a Freon alternative refrigerant), as well as parameters for determining what extent of reserve capacity remains before reaching full capacity and whether a plant is operating normally.

The management server also includes a database that collects and accumulates information regarding a supply forecast by chemical product for a certain time period in the future, and a database that collects and accumulates information regarding a demand forecast by chemical product for the certain time period in the future. The information on the supply forecast by chemical product for a certain time period in the future and the information on the demand forecast by chemical product for the certain time period in the future can be obtained, for example, from market research and model construction (moving average method, exponential smoothing method, ARIMA model, BASS model, etc.).

The management server is further provided with: a function unit that calculates a difference between the demand forecast and the supply forecast for a chemical product for the certain time period in the future; a function unit that allocates the difference to one or more chemical plants; a function unit that simulates the difference as a production plan; a function unit that simulates the difference as a storage and delivery plan; and a transmission unit that transmits to each user terminal the production plan and the storage and delivery plan.

According to such a chemical product production system, the operating state of chemical plants in a specific region (for example, Japan) or worldwide can be understood, and based on a demand forecast and a supply forecast for a specific chemical product, a plant with excess capacity (supply side) and a plant with a capacity shortage (demand side) are coordinated (matched), and a production plan and a delivery plan for the chemical product are created, and therefore the capacity of chemical plants in a specific region (for example, Japan) or worldwide can be efficiently utilized, and the production and supply of the chemical product can be optimized. Such a chemical product production system also allows for the effective use of an idle plant. Furthermore, in the matching described above, the supply side and the demand side can be anonymous, and thus confidential information is not diffused.

The operating entity (management server owner) of this chemical product production system may be, for example, any of a public organization such as a national government agency, a private organization such as a trading company, or the like.

The chemical product is not particularly limited, but is preferably a chemical product that is produced in large quantities in two or more plants belonging to different companies because a significant effect can be obtained. Examples of the above chemical product include chemical products that use petroleum or coal as a raw material, and chemical products that use biomass (e.g., wood, corn, and sugarcane) as a raw material. Furthermore, the chemical product may be an organic compound or an inorganic compound, and may be a gas, a liquid, or a solid.

Representative examples of the above chemical products include, for example, hydrocarbons (such as methane, ethane, ethylene, propane, propylene, butane, butadiene, hexane, benzene, toluene, xylene, styrene, and cyclohexane), halogenated hydrocarbons (such as methylene chloride, chloroform, carbon tetrachloride, trichloroethylene, tetrachloroethylene, tetrafluoroethylene, and vinyl chloride), alcohols (such as methanol, ethanol, isopropyl alcohol, n-propyl alcohol, butanol, ethylene glycol, propylene glycol, glycerin, cyclohexyl alcohol, diethylene glycol, and polyethylene glycol), phenols (such as phenol and cresol), carboxylic acids (such as formic acid, acetic acid, propionic acid, (meth)acrylic acid, crotonic acid, maleic acid, fumaric acid, oxalic acid, succinic acid, adipic acid, benzoic acid, phthalic acid, terephthalic acid, p-hydroxybenzoic acid, and nicotinic acid), esters (such as methyl acetate, ethyl acetate, butyl acetate, vinyl acetate, methyl (meth)acrylate, ethyl (meth)acrylate, butyl (meth)acrylate, and ethyl terephthalate), fats and oils, ethers (such as diethyl ether, ethylene oxide, propylene oxide, tetrahydrofuran, dioxane, anisole, and diphenyl ether), aldehydes (such as formaldehyde, acetaldehyde, acrolein, and benzaldehyde), ketones (such as acetone, ethyl methyl ketone, diethyl ketone, methyl isobutyl ketone, and cyclohexanone), nitriles (such as acetonitrile and acrylonitrile), amines (such as methylamine, ethylamine, butylamine, ethylene diamine, hexamethylene diamine, benzylamine, aniline, and isophorone diamine), nitrogen-containing aromatic heterocyclic compounds (such as pyridine and picoline), urea, thermoplastic resins (such as polyethylene, polypropylene, polyvinyl chloride, polyvinylidene chloride, polystyrene, polyvinyl acetate, thermoplastic polyurethane, polytetrafluoroethylene, ABS resin, AS resin, acrylic resin, polyamide, polyacetal, polycarbonate, modified polyphenylene ether, polyester, cyclic polyolefin, polyphenylene sulfide, polysulfone, polyether sulfone, amorphous polyarylate, liquid crystal polymers, polyether ether ketone, thermoplastic polyimides, and polyamide imide), thermosetting resin (such as phenolic resin, epoxy resin, melamine resin, urea resin, unsaturated polyester resins, alkyd resins, polyurethanes, and thermosetting polyimides), cellulose derivatives (such as cellulose, cellulose acetate, hydroxyethylcellulose, and carboxymethylcellulose), sugars (such as dextrose, sucrose, and starch), hydrogen, oxygen, ozone, nitrogen, carbon monoxide, carbon dioxide, ammonia, chlorine, hydrogen peroxide, inorganic acids (such as hydrochloric acid, sulfuric acid, nitric acid, boric acid, and phosphoric acid), inorganic salts (such as sodium chloride, sodium carbonate, sodium bicarbonate, sodium perchlorate, sodium hypochlorite, sodium sulfate, sodium nitrate, calcium chloride, and calcium carbonate), inorganic hydroxides (such as sodium hydroxide, potassium hydroxide, and aluminum hydroxide), and inorganic oxides (such as calcium oxide, silica, alumina, titanium oxide, manganese dioxide, and phosphorous pentoxide).

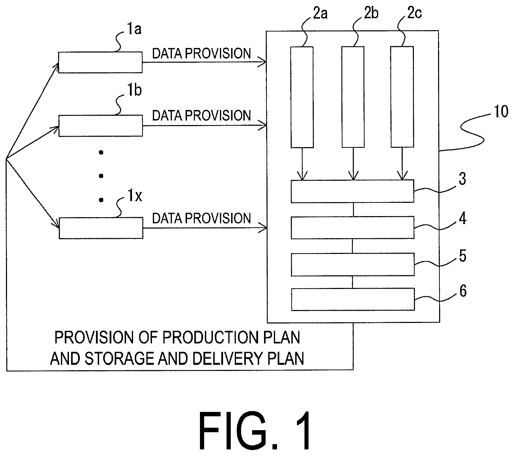

FIG. 1 is a schematic block diagram illustrating one embodiment of a chemical product production system of the present invention. In this example, 1a, 1b, ..., and 1x each indicate a user terminal of a chemical plant capable of producing a specific chemical product. The user terminals 1a, 1b, ..., 1x may each belong to the same company, but from the perspective of obtaining a significant effect, preferably, at least one user terminal belongs to a different company, and more preferably, all of the user terminals each belong to a different company. The total number of user terminals may be at least 2, but is preferably at least 3 (for example, from 3 to 10).

Various information is provided (transmitted) from each of the user terminals 1a, 1b, ..., 1x to a management server 10 ordinarily owned by the operating entity of the system. These pieces of information include the plant operating status (past, present, and future) by chemical product. These pieces of information may also include the manufacturing flow, production capacity, storage capacity, and transport capacity, etc., of each plant.

The management server 10 is provided with a database 2a, a database 2b, and a database 2c. User-specific ID numbers and information that is transmitted from each user terminal and pertains to the plant operating status by chemical product are collected and accumulated in the database 2a. Typically, the operating entity manages the user-specific IDs (management of association of actual names with IDs). The plant operating status includes past, present, and future information by chemical product and by grade.

Information regarding supply forecasts (availability) by chemical product for a certain time period in the future is collected and accumulated in the database 2b. Information regarding demand forecasts (ordering schedule) by chemical product for a certain time period in the future is collected and accumulated in the database 2c.

The management server 10 is further provided with a difference calculation function unit 3, a simulation function unit 4, a margin calculation function unit 5, and a transmission function unit 6. The difference calculation function unit 3 calculates a difference between the demand forecast and the supply forecast in the prescribed time period for the predetermined chemical product. Then, the simulation function unit 4 allocates the difference to each of the chemical plants, and simulates a production plan and a storage and delivery plan. A production volume (time, date, month, year) of a specific plant can be planned as the production plan.

The margin calculation function unit 5 calculates a differential revenue based on the production plan and the storage and delivery plan. The revenue is, for example, divided into information registration, matching, production planning, and delivery planning, and the margins of each are calculated.

The production plan and the storage and delivery plan thus obtained for the predetermined chemical product are provided to each chemical plant, and on the basis thereof, the production plan and storage and delivery plan are implemented at each chemical plant.

In addition to the simulation function unit 4 that creates the production plan and the storage and delivery plan for each of the chemical plants, and the margin calculation function unit 5 that calculates the differential revenue of each of the chemical plant, the management server 10 may also be provided with an ID management system for the supply side (chemical plant with excess capacity) and the demand side (chemical plant with capacity shortage).

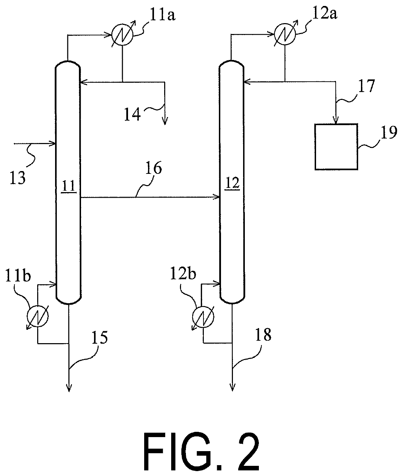

A system for the production of n-butyl acetate (hereinafter abbreviated as "butyl acetate") will be specifically described below. As an example, a case in which there are three butyl acetate production plants, namely, a plant a (company A), a plant b (company B), and a plant c (company C), present in a country is described. These plants are dedicated to the production of butyl acetate, and all have the manufacturing flow illustrated in FIG. 2. Hereinafter, the description will be given based on FIG. 2.

A crude reaction product obtained by esterifying acetic acid and n-butanol in a reaction system (not illustrated) in the presence of a sulfuric acid catalyst is neutralized and rinsed with water, and most of the water and the sulfuric acid catalyst are separated using a decanter, after which a feed liquid containing butyl acetate, n-butanol, water, sulfuric acid, and a trace amount of by-products is supplied to a low-boiling point substance removal column 11 through a line 13 (low-boiling point substance removal column supply line) and subjected to distillation. In addition to some of butyl acetate, low-boiling point substances such as n-butanol and water are distilled away from the top of the low-boiling point substance removal column 11 through a line 14 (low-boiling point substance removal column distillation line). From the bottom of the column, in addition to butyl acetate, high-boiling point substances, such as alkyl sulfates such as trace amounts of sulfuric acid, monobutyl sulfate, and dibutyl sulfate, incorporated from the reaction system are discharged through a line 15 (low-boiling point substance removal column discharge line). Crude butyl acetate is removed (side cut) from a column side section of the low-boiling point substance removal column 11. The crude butyl acetate removed from the column side section of the low-boiling point substance removal column 11 is supplied to a high-boiling point substance removal column 12 through a line 16 (high-boiling point substance removal column supply line) and subjected to distillation. The butyl acetate product is distilled out from the column top of the high-boiling point substance removal column 12, and is supplied through a line 17 (high-boiling point substance removal column distillation line) to a product tank 19 and stored therein. From the bottom of the high-boiling point substance removal column 12, in addition to some of butyl acetate, high-boiling point substances, such as alkyl sulfates such as sulfuric acid, monobutyl sulfate, and dibutyl sulfate, are discharged through a line 18 (high-boiling point substance removal column discharge line). Note that in FIG. 2, 11a and 12a denote condensers, and 11b and 12b denote re-boilers.

In the production system according to an embodiment of the present invention, in order to effectively utilize the above-mentioned three butyl acetate production plants a, b, and c to efficiently produce butyl acetate, a management server and a user terminal of each of the three butyl acetate production plants a, b, and c are connected through a network.

The management server has a database that collects and accumulates ID numbers specific for each of the companies A, B and C, which are the users, and information that is transmitted from each user terminal and pertains to the operating status of the butyl acetate production plants a, b, and c. Information that is transmitted from each user terminal and pertains to the operating status of the butyl acetate production plant includes information pertaining to the past, present and future operating status and operating forecasts of each of the plants a, b, and c. This information may also include the production capacity, storage capacity, transport capacity, and the like of each of the plants a, b, and c. As information pertaining to the operating status of each of the plants a, b, and c, for example, information such as the flow rate (flow rate per unit hour or integrated value) of fluids flowing through pipes 13, 16, and 17, the liquid volume in the tank 19 that stores the butyl acetate product, and a parameter indicating reserve capacity relative to full capacity are included.

The management server also includes a database that collects and accumulates information regarding a butyl acetate supply forecast for a certain time period in the future, and a database that collects and accumulates information regarding a butyl acetate demand forecast for a certain time period in the future. In addition, the management server is also provided with: a function unit that calculates a difference between the demand forecast and the supply forecast for butyl acetate for the certain period in the future; a function unit that allocates the difference to the butyl acetate production plants a, b, and c; a function unit that simulates the difference as a production plan; a function unit that simulates the difference as a storage and delivery plan; and a transmission unit that transmits the production plan and the storage and delivery plan to the terminals of each of companies A, B, and C, which are the users.

According to such a production system, the operating status of the butyl acetate production plants a, b, and c can be accurately understood, and based on the demand forecast and the supply forecast for butyl acetate, production plans and delivery plans can be created for a plant having excess capacity (for example, plant a) and a plant having a capacity shortage (for example, plant c), and therefore the capacity of each of the butyl acetate production plants a, b, and c can be efficiently utilized, and the production and supply of butyl acetate can be optimized.

In the example described above, the target chemical product of the production system is butyl acetate, but the present invention is not limited thereto, and various chemical products in liquid, gas, and solid form can be targets of the production system. In the example described above, production of the chemical product is performed in a continuous manner both in the reaction system and a purification system, but one or both of the reaction system and the purification system may be configured in a batch manner. In addition, the chemical product production plant may include, in addition to the reaction system and purification system, a recovery system, or the like. Furthermore, in the example described above, all of the plurality of chemical product production plants are plants that are dedicated to the production of a specific chemical product, but the present invention is not limited thereto, and at least one plant may be a general purpose plant. Also, the manufacturing flow of the plurality of chemical product production plants need not necessarily be the same, and the manufacturing flow need only be capable of producing the chemical product.

To summarize the above, configurations of the present invention and variations thereof will be described below.
[1] A chemical product production system that effectively utilizes a plurality of chemical plants, wherein
   a management server and a user terminal of each of the plurality of chemical plants are connected through a network; and
   the management server is provided with: a database that collects and accumulates user-specific ID numbers and information that is transmitted from each user terminal and pertains to a plant operating status by chemical product; a database that collects and accumulates information on a supply forecast by chemical product for a certain time period in the future; a database that collects and accumulates information on a demand forecast by chemical product for the certain time period in the future; a difference calculation function unit that calculates a difference between the demand forecast and the supply forecast for a chemical product for the certain time period in the future; a simulation function unit that allocates the difference to one or more chemical plants and simulates a production plan and a storage and delivery plan; and a transmission function unit that transmits to each user terminal the production plan and the storage and delivery plan, optimized through the simulation.
[2] The chemical product production system according to [1], wherein information that is transmitted from each user terminal and pertains to the plant operating status by chemical product includes at least one of information pertaining to a past, present and future operating status by chemical product and an operating forecast of each plant.
[3] The chemical product production system according to [1] or [2], wherein the information that is transmitted from each user terminal and pertains to the plant operating status by chemical product includes at least one of a manufacturing flow of each plant, a name of a chemical product that can be produced, a production capacity, a storage capacity, and a transport capacity of each plant.
[4] The chemical product production system according to any one of [1] to [3], wherein the management server further includes a margin calculation function unit that calculates a differential revenue.
[5] The chemical product production system according to any one of [1] to [4], wherein the management server further includes an ID management system for a supply side (chemical plant with excess capacity) and a demand side (chemical plant with capacity shortage).
[6] The chemical product production system according to any one of [1] to [5], wherein the chemical product is a chemical product derived from petroleum or coal, or a chemical product derived from biomass.
[7] The chemical product production system according to any one of [1] to [6], wherein the chemical product is a hydrocarbon (such as methane, ethane, ethylene, propane, propylene, butane, butadiene, hexane, benzene, toluene, xylene, styrene, and cyclohexane), a halogenated hydrocarbon (such as methylene chloride, chloroform, carbon tetrachloride, trichloroethylene, tetrachloroethylene, tetrafluoroethylene, and vinyl chloride), an alcohol (such as methanol, ethanol, isopropyl alcohol, n-propyl alcohol, butanol, ethylene glycol, propylene glycol, glycerin, cyclohexyl alcohol, diethylene glycol, and polyethylene glycol), a phenol (such as phenol and cresol), a carboxylic acid (such as formic acid, acetic acid, propionic acid, (meth)acrylic acid, crotonic acid, maleic acid, fumaric acid, oxalic acid, succinic acid, adipic acid, benzoic acid, phthalic acid, terephthalic acid, p-hydroxybenzoic acid, and nicotinic acid), an ester (such as methyl acetate, ethyl acetate, butyl acetate, vinyl acetate, methyl (meth)acrylate, ethyl (meth)acrylate, butyl (meth)acrylate, and ethyl terephthalate), a fat or oil, an ether (such as diethyl ether, ethylene oxide, propylene oxide, tetrahydrofuran, dioxane, anisole, and diphenyl ether), an aldehyde (such as formaldehyde, acetaldehyde, acrolein, and benzaldehyde), a ketone (such as acetone, ethyl methyl ketone, diethyl ketone, methyl isobutyl ketone, and cyclohexanone), a nitrile (such as acetonitrile and acrylonitrile), an amine (such as methylamine, ethylamine, butylamine, ethylene diamine, hexamethylene diamine, benzylamine, aniline, and isophorone diamine), a nitrogen-containing aromatic heterocyclic compound (such as pyridine and picoline), urea, a thermoplastic resin (such as polyethylene, polypropylene, polyvinyl chloride, polyvinylidene chloride, polystyrene, polyvinyl acetate, thermoplastic polyurethane, polytetrafluoroethylene, ABS resin, AS resin, acrylic resin, polyamide, polyacetal, polycarbonate, modified polyphenylene ether, polyester, cyclic polyolefin, polyphenylene sulfide, polysulfone, polyether sulfone, amorphous polyarylate, liquid crystal polymers, polyether ether ketone, thermoplastic polyimides, and polyamide imide), a thermosetting resin (such as phenolic resin, epoxy resin, melamine resin, urea resin, unsaturated polyester resins, alkyd resins, polyurethanes, and thermosetting polyimides), a cellulose derivative (such as cellulose, cellulose acetate, hydroxyethylcellulose, and carboxymethylcellulose), a sugar (such as dextrose, sucrose, and starch), hydrogen, oxygen, ozone, nitrogen, carbon monoxide, carbon dioxide, ammonia, chlorine, hydrogen peroxide, an inorganic acids (such as hydrochloric acid, sulfuric acid, nitric acid, boric acid, and phosphoric acid), an inorganic salt (such as sodium chloride, sodium carbonate, sodium bicarbonate, sodium perchlorate, sodium hypochlorite, sodium sulfate, sodium nitrate, calcium chloride, and calcium carbonate), an inorganic hydroxide (such as sodium hydroxide, potassium hydroxide, and aluminum hydroxide), or an inorganic oxide (such as calcium oxide, silica, alumina, titanium oxide, manganese dioxide, and phosphorous pentoxide).

### Industrial Applicability

According to the present invention, based on a database in which specific information regarding a plurality of chemical plants is accumulated, a database in which information on a future supply forecast by chemical product is accumulated, and a database in which information regarding a future demand forecast by chemical product is accumulated, a difference between a demand forecast and a supply forecast for a predetermined chemical product for a predetermined time period in the future is calculated, the difference is allocated to each chemical plant, a production plan and a storage and delivery plan for the chemical product are simulated, and the result is transmitted to each chemical plant, and therefore the capacity of chemical plants in a predetermined area, for example, chemical plants in Japan, or chemical plants worldwide can be effectively utilized to achieve overall optimization of the production and supply of the chemical product.

In addition, since determinations are made based on objective data, production and distribution innovations can be achieved on a global level without being influenced by an independent decision by a specific manufacturer or specific trading company. Furthermore, since risk can be dispersed, the management burden with regard to investments and amortization can be alleviated for small and medium-sized companies in particular.

In addition, since energy can be more efficiently utilized, the environmental burden can also be reduced.

### Reference Signs List

1a, 1b, ..., 1x User terminal
2a, 2b, 2c Database
3 Difference calculation function unit
4 Simulation function unit
5 Margin calculation function unit
6 Transmission function unit
10 Management server
11 Low-boiling point substance removal column
12 High-boiling point substance removal column
13 Low-boiling point substance removal column supply line
14 Low-boiling point substance removal column distillation line
15 Low-boiling point substance removal column discharge line
16 High-boiling point substance removal column supply line
17 High-boiling point substance removal column distillation line
18 High-boiling point substance removal column discharge line
19 Product tank

## Claims

1. A chemical product production system that effectively utilizes a plurality of chemical plants, wherein
a management server and a user terminal of each of the plurality of chemical plants are connected through a network; and
the management server is provided with: a database that collects and accumulates user-specific ID numbers and information that is transmitted from each user terminal and pertains to a plant operating status by chemical product; a database that collects and accumulates information on a supply forecast by chemical product for a certain time period in the future; a database that collects and accumulates information on a demand forecast by chemical product for the certain time period in the future; a difference calculation function unit that calculates a difference between the demand forecast and the supply forecast for a chemical product for the certain time period in the future; a simulation function unit that allocates the difference to one or more chemical plants and simulates a production plan and a storage and delivery plan; and a transmission function unit that transmits to each user terminal the production plan and the storage and delivery plan, optimized through the simulation.

2. The chemical product production system according to claim 1, wherein the management server further comprises a margin calculation function unit that calculates a differential revenue.

3. The chemical product production system according to claim 1 or 2, wherein the chemical product is a chemical product derived from petroleum or coal, or a chemical product derived from biomass.
